# EUROPEAN PATENT SPECIFICATION

(11) **EP 2 785 198 B1**
(45) Date of publication and mention of the grant of the patent: **12.07.2017**
(21) Application number: 12812723.0
(22) Date of filing: 19.11.2012
(51) Int. Cl.: A23L 5/10, A23L 33/20, A47J 27/08

(54) **DEVICE AND METHOD FOR COOKING STARCH-CONTAINING FOOD**
VORRICHTUNG UND VERFAHREN ZUM GAREN STÄRKEHALTIGER NAHRUNGSMITTEL
DISPOSITIF ET PROCÉDÉ DE CUISSON D'ALIMENT CONTENANT DE L'AMIDON

(30) Priority: 28.11.2011 WO PCT/CN2011/083063
(43) Date of publication of application: 08.10.2014
(73) Proprietor: Koninklijke Philips Electronics N.V., 5656 AE Eindhoven (NL)
(72) Inventor: LI, Mo, NL-5656 AE Eindhoven (NL); ZHOU, Ning, NL-5656 AE Eindhoven (NL)
(74) Representative: Coops, Peter
(86) International application number: PCT/IB2012/056542
(87) International publication number: WO 2013/098670

(56) References cited:
- JP-A- 2008 154 660
- JP-A- 2011 024 929
- US-A1- 2003 051 606
- US-A1- 2009 004 361
- BALJEET S.Y. ET AL: "Studies on effect of multiple heating/cooling cycles on the resistant starch formation in cereals, legumes and tubers", INTERNATIONAL JOURNAL OF FOOD SCIENCE AND NUTRITION, vol. 60, 2009, pages 258-272, XP9168608,

## Description

### Field of the Invention

The present invention relates to home cooking, and particularly to a device and a method for cooking starch-containing food.

### Background of the Invention

Nowadays, the electric pressure cooker is widely used to cook food due to its high efficiency Chinese patent application No.200910192913.7 discloses an electric pressure cooker comprising an outer container, a lid covering the outer container, an inner container mounted inside the outer container, a heating unit arranged beneath the inner container, and a controller.

US20090004361A1 discloses a method for preparing cooked rice with barley in an aseptic packing process, comprising mixing barley, which had been sterilization-treated and then dried, with non-glutinous rice. The method for preparing cooked rice with barley in an aseptic packing system according to the present invention is characterized in that by using barley that has been first gelatinized and then retrogradated, the cooked rice with barley has a reduced initial level of microorganisms in the barley.

### Object and Summary of the Invention

Scientific research has proven that dietary fibers may provide many health benefits, such as lower blood pressure and cholesterol levels, and they may reduce cardio-vascular diseases, improve gastro-intestinal health and lower colon cancer, etc; however, the content of resistant starch (which can be regarded as dietary fiber according to the definition of the American Association of Cereal Chemists International) in the resulting food cooked in the traditional pressure cooker, for example the above-mentioned electric pressure cooker, is relatively low.

In terms of the above concerns, it would therefore be desirable to achieve a cooker and a method for cooking starch-containing food, by means of which the resulting food may contain a higher content of resistant starch. The invention is defined by the claims.

In one aspect, an embodiment of the invention provides a method of cooking starch-containing food grains in a container of a cooker, the method comprising the steps of:
- adding a first portion of water and the starch-containing food grains into the container to form a mixture;
- heating the mixture of starch-containing food grains and the first portion of water to a first temperature to generate a heated mixture, the first temperature being higher than 110°C;
- cooling down the heated mixture to a second temperature to generate a cooled mixture;
- repeating the steps of heating and cooling for a given number of cycles to achieve a total cooking duration;
- after all repeated steps of heating and cooling are finished:
- adding a second portion of water into the container; and
- heating the cooled mixture and the second portion of water so as to make the food in the container ready for consumption.

The native starch in plant tissue is in granular form. In said granular form, amylopectin (the branched molecule) is in semi-crystalline form shaped like a tree branch. The amylose (the linear molecule) is dispersed between amylopectin in the form of a helix structure or complexed with lipid (the amylose-lipid complex). Upon being heated in water to a temperature, for example around 60 - 70 °C, the amylose molecule in the granule will start to leach out of the granule. When further heated up to 110°C or higher, the amylose-lipid complex will melt and dissociate to amylose and lipid molecules. During the heating process of the invention, when the mixture of starch-containing food and the first portion of water in the container is first heated to a temperature of, for example, 60-70°C, some of the amylose molecules leach out of the granules, and further heating to the first temperature in excess of 110°C, causes some of the amylose-lipid complexes in the starch-containing food to be dissociated into amylose and lipid molecules.

Then, during the cooling process of the invention, when the heated mixture in the container is cooled down to the second temperature, for example 100°C, the amylose molecules, both leached out of granules and dissociated from the complexes, randomly hit each other and form amylose-amylose crystals which are called resistant starch. The resistant starch functions in the same way as dietary fibers when ingested.

As the amylose molecules move randomly, some of the amylose molecules may not meet other amylose molecules and remain single molecules, or recomplex with lipids to form an amylose-lipid complex again. By repeating the steps of heating and cooling, more crystals are formed, thus resulting in a high resistant starch content in the resulting food.

In each cycle of the steps of heating and cooling, the first temperature during the heating process may be the same or different, and, likewise, the second temperature during the cooling process may also be the same or different.

As some of the crystals that are formed during the cooling process will melt and turn back to amylose molecules when they are heated to a temperature above 130°C, advantageously, the first temperature may be less than 130°C. Therefore, more resistant starch could be generated in the resulting food.

Advantageously, the heated mixture is maintained at the first temperature for a first duration. In this way, more amylose-lipid complexes in the starch-containing food are dissociated into amylose and lipid molecules, and more amylose molecules leach out of the granules.

Advantageously, the cooled mixture is maintained at the second temperature for a second duration. By doing so, more amylose molecules are associated with each other, which results in more resistant starch. After all repeated steps of heating and cooling are finished, the method further comprises the steps of:
- adding a second portion of water into the container;
- heating the cooled mixture and the second portion of water so as to make the food in the container ready for consumption.

Cooking some types of food, for example Chinese gruel, requires a high ratio of water to starch-containing food. However, a high ratio of water to starch-containing food would reduce the possibility of crystallization during the cooling process due to the fact that the large amount of water would reduce the concentration of the amylose molecules. Based on this concern, the water for cooking the starch-containing food is separated into two parts, i.e. the first portion of water that is added into the container at the very beginning, and the second portion of water that is added into the container after all repeated steps of heating and cooling are finished. Therefore, more resistant starch could be generated in the resulting gruel than that cooked by the traditional method where all the water is added to the container at the beginning.

In another aspect, the invention provides a food cooker as defined in claim 8.

### Brief Description of the Drawings

The above and other objects and features of the present invention will become more apparent from the following detailed description considered in connection with the accompanying drawings, in which:
FIG. 1 shows an exemplary food cooker according to one embodiment of the invention;
FIG. 2 shows a flow chart of a method of cooking starch-containing food according to one embodiment of the invention.

### Detailed Description

Reference will now be made to embodiments of the invention, one or more examples of which are illustrated in the figures. The embodiments are provided by way of explanation of the invention, and are not meant as a limitation of the invention.

The food cooker of the invention comprises a container configured to receive starch-containing food grains and a first portion of water; a heating unit coupled with the container; a controller electrically coupled to the heating unit and configured to control the heating unit to heat a mixture of the starch-containing food and the first portion of water in the container to a first temperature to generate a heated mixture, the first temperature being higher than 110°C, and to cool down the heated mixture in the container to a second temperature to generate a cooled mixture when the mixture of the starch-containing food and the first portion of water in the container has been heated to the first temperature; wherein the controller controls the repeated heating and cooling steps for a given number of cycles to achieve a total cooking duration; wherein the food cooker further comprises a water tank, wherein the controller is further configured to control the water tank to be open, thus enabling a second portion of water to be added into the container, and to control the heating unit to heat the cooled mixture and the second portion of water so as to make the food in the container ready for consumption. The starch-containing food may comprise rice, corn, pumpkin, potato, or any other grains, vegetables or fruits rich in starch.

The term 'water' described herein may refer to any suitable solvent for cooking food, such as mineral water, tap water, salted water, for example, or any combination of those solvents.

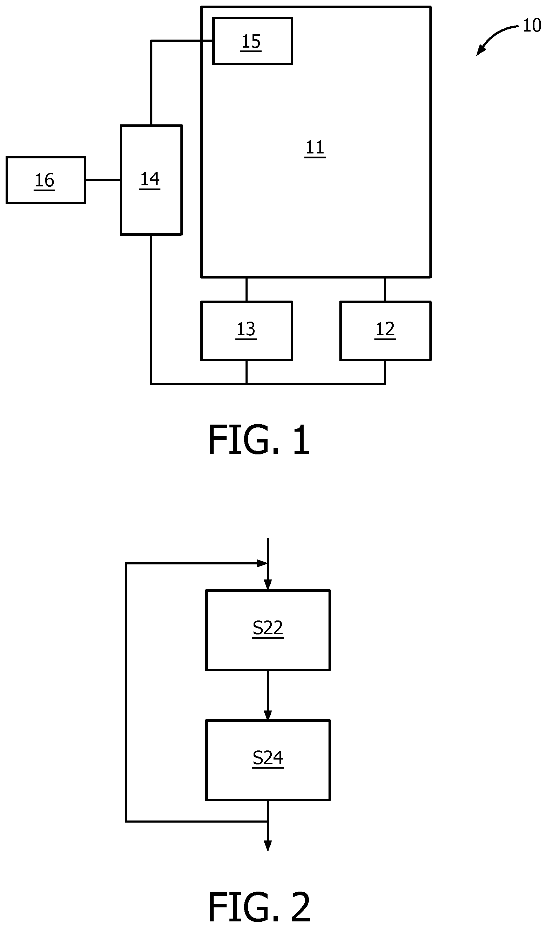

Hereinafter, for illustrative purposes only, the configuration/implementation of the food cooker of the invention will be described using rice as an illustrative example of the starch-containing food. It shall be appreciated that a person of ordinary skill in the art can then fully appreciate the configuration/implementation of the food cooker in relation to other starch-containing food grains. FIG. 1 shows an exemplary food cooker for cooking starch-containing food according to one embodiment of the invention.

Referring to FIG. 1, the food cooker 10 comprises a container 11 configured to receive rice and a first portion of water. The container 11 may be made from any suitable thermally conductive material, such as aluminium or stainless steel, for example. For ease of cleaning, a non-stick coating may be applied to the thermally conductive material.

The food cooker 10 further comprises a heating unit 12 coupled with the container 11 and configured to heat the food in the container 11. The heating unit 12 may take on any suitable configuration, but generally includes a heating plate arranged beneath the container 11, or a heating wire arranged around the container 11.

The food cooker 10 further comprises a cooling unit 13 coupled with the container 11 and configured to cool the food in the container 11. Any known cooling unit may be used here, such as a fan that may facilitate the air circulation around the container 11, or a valve that may release the pressure inside the container 11, or a semiconductor cooler.

The food cooker 10 further comprises a controller 14 electrically coupled to the heating unit 12 and the cooling unit 13. The controller 14 is configured to control the heating unit 12 to heat the food in the container 11, and/or control the cooling unit 13 to cool the food in the container 11. The controller 14 can be implemented by way of software, hardware or combinations thereof. For example, it can be implemented by software and the program codes performing the calculating function are stored in a memory and are loaded and executed by a micro controller unit (MCU).

In operation, after the rice and the first portion of water are put into the container 11, and the food cooker 10 is activated, the controller 14 first controls the heating unit 12 to be on to heat the mixture of the rice and the first portion of water in the container 11 to a first temperature at which some of the amylose-lipid complexes in the starch-containing food are dissociated into amylose and lipid molecules so as to generate a first heated mixture. The empirical value of the first temperature is higher than 110°C.

Various configurations may be used to achieve the heating of the food in the container 11 to the first temperature. For example, to be specific, the container 11 may comprise a main body configured to receive the rice and the first portion of water, a lid intended to cover the main body in order to seal it, and a valve provided on the lid to release the pressure inside the main body when the pressure is above a certain value (i.e. the temperature of the food in the container 11 is above a certain value, for example the first temperature). The configuration and the work principle of the container 11 are similar to those of the existing pressure cooker, which will not be described in detail here. When the controller 14 controls the heating unit 12 to be on, the heating unit 12 begins to heat the mixture of the rice and the first portion of water in the container 11. As the main body is sealed by the lid, the temperature of the food inside the container 11 continues to go up and even exceeds 100°C. When the temperature of the food in the container 11 reaches the first temperature, the valve is opened automatically to release the pressure inside the container 11. In this way, the food in the container 11 could be heated to the first temperature in excess of 110°C.

Further, during the heating process, a temperature sensor (not shown) may be used to measure the temperature of the food in the container 11 in real time and then provide the measurement results to the controller 14. The controller 14 controls the heating unit 12 to keep heating until it receives from the temperature sensor the measurement result indicating that the temperature of the food in the container 11 has reached the first temperature. The heating time of the mixture of the rice and the first portion of water in the container 11 to the first temperature may depend on various factors, for example, the power of the heating unit 12, the amount of rice and of the first portion of water in the container 11, etc.

When the mixture of the rice and the first portion of water in the container 11 is first heated to a temperature, for example 60-70°C, some of the amylose molecules in the granules start to leached out of the granules. As the temperature increases further to the first temperature, being above 110°C, some of the amylose-lipid complexes in the rice are dissociated into amylose and lipid molecules.

Advantageously, after the mixture of the rice and the first portion of water is heated to the first temperature to generate the first heated mixture, the controller 14 may further control the heating unit 12 to maintain the first heated mixture at the first temperature for a first duration. Therefore, more amylose molecules could be dissociated from the amylose-lipid complexes in the rice, and also more amylose molecules could be leached out of the granules.

Various ways may be used to keep the first heated mixture at the first temperature. For example, the controller 14 may maintain the first heated mixture at the first temperature by regulating the power of the heating unit 12. To be specific, for example, a temperature sensor (not shown) may be used to measure the temperature of the food in the container 11 in real time and then provide the measurement results to the controller 14. The controller 14 receives the measurement result from the temperature sensor and then compares it with the first temperature. If the measurement result, i.e. the temperature of the food in the container 11, is above the first temperature, the controller 14 reduces the power of the heating unit 12, and if the measurement result, i.e. the temperature of the food, is below the first temperature, the controller 14 increases the power of the heating unit 12.

The first duration may be preset and pre-stored in the controller 14, or may be obtained according to a user configuration which will be described in detail later.

After the first heated mixture has been maintained at the first temperature for the first duration, the controller 14 further controls the cooling unit 13 to cool down the first heated mixture to a second temperature to generate a first cooled mixture. To be specific, for example, during the cooling process, a temperature sensor (not shown) may be used to measure the temperature of the food in the container 11 in real time and then provide the measurement results to the controller 14. The controller 14 controls the cooling unit 13 to keep cooling until it receives from the temperature sensor the measurement result indicating that the temperature of the food in the container 11 has reached the second temperature. The second temperature may be less than 100°C, for example.

As the first heated mixture in the container 11 is cooled down to the second temperature, the amylose molecules, both leached out of the granules and dissociated from the complexes, can randomly hit each other and form amylose-amylose crystals, i.e. resistant starch.

Based on different forms of the cooling unit 13 mentioned above, the controller 14 may control the cooling unit 13 to cool down the first heated mixture in the container 11 using different approaches. For example, when the cooling unit 13 is a fan, after the first heated mixture in the container 11 has been maintained at the first temperature for the first duration, the controller 14 may control the heating unit 12 to stop heating while turning on the fan to facilitate the air circulation around the container 11, so as to accelerate the cooling process. When the cooling unit 13 is a semiconductor cooler, after the first heated mixture in the container 11 has been maintained at the first temperature for the first duration, the controller 14 may control the semiconductor cooler to operate, thereby reducing the temperature of the food in the container 11. When the cooling unit 13 is a valve, after the first heated mixture in the container 11 has been maintained at the first temperature for the first duration, the controller 14 may control the valve to be open to release the pressure inside the container 11, so that the temperature of the food in the container 11 could be reduced. In this case, the cooling unit 13 may share the valve used during the heating process.

The cooling time for cooling down the first heated mixture in the container 11 to the second temperature may depend on various factors, for example, the type of cooling unit 12, the amount of the first heated mixture in the container 11, etc.

Advantageously, after the first heated mixture in the container 11 is cooled down to the second temperature to generate the first cooled mixture, the controller 14 may further control the heating unit 12 to maintain the first cooled mixture at the second temperature for a second duration. In this way, more resistant starch could be generated. The method of maintaining the first cooled mixture at the second temperature may be same as that of maintaining the first heated mixture at the first temperature, which will not be described here for the sake of simplicity.

The second duration may be preset and pre-stored in the controller 14, or may be obtained according to a user configuration, which will be described in detail later.

It is to be noted that, in other embodiments, the cooling unit 13 of FIG. 1 may be omitted. In this regard, during the cooling process, the controller 14 may only control the heating unit 12 to stop heating, and the first heated mixture in the container 11 is cooled down to the second temperature through thermal exchange with the surrounding atmosphere.

The aforesaid heating process (i.e. the step of heating) and the following cooling process (i.e. the step of cooling) constitute a cycle. To increase the content of resistant starch in the resulting food, the cycle may be repeated a given number of times. The number of times the cycle is repeated may be preset in the controller 14, or may be obtained according to a user configuration, which will be described later in detail.

Using two cycles as an example, after the first cooled mixture is maintained at the second temperature for the second duration, the controller 14 further controls the heating unit 12 to heat the first cooled mixture in the container 11 to the first temperature being higher than 110°C to generate a second heated mixture. It is to be noted that the first temperature in different cycles may be the same or different.

Since some of the crystals formed during the cooling process will be melted and turn back to the amylose molecules when they are heated to a temperature above 130°C, advantageously, the first temperature may be less than 130°C. Therefore, more resistant starch could be generated in the resulting food.

Advantageously, after the first cooled mixture is heated to the first temperature to generate the second heated mixture, the controller 14 may further control the heating unit 12 to maintain the second heated mixture at the first temperature for the first duration. It is to be noted that the first duration in different cycles may be the same or different.

After the second heated mixture has been maintained at the first temperature for the first duration, the controller 14 further controls the cooling unit 13 to cool down the second heated mixture to the second temperature to generate a second cooled mixture. It is to be noted that the second temperature in different cycles may be the same or different.

Advantageously, after the second heated mixture in the container 11 is cooled down to the second temperature to generate the second cooled mixture, the controller 14 may further control the heating unit 12 to maintain the second cooled mixture at the second temperature for the second duration. It is to be noted that the second duration in different cycles may be the same or different.

The first duration may be longer than 5 minutes for example, and the second duration may be longer than 10 minutes for example. In the situation that the cycle of the steps of heating and cooling is repeated only once, advantageously, the first duration shall be long enough to ensure that the food in the container 11 is cooked and ready for consumption.

Still referring to FIG. 1, advantageously, the food cooker 10 may further comprise a first unit 16 electrically coupled to the controller 14. The first unit 16 may take the form of a user interface for example, through which the user may input information related to a total cooking duration.

In operation, when the first unit 16 obtains the information related to the total cooking duration input by the user, it will provide the information to the controller 14. Based on the information, the controller 14 may determine the number of cycles and/or the first duration and/or the second duration.

It is to be noted that the total cooking duration may also be preset in the controller 14.

It shall be appreciated that the information input by the user may further comprise the time when he or she wants the food to be ready, and/or the cooking mode he or she selects, etc. The cooking mode may comprise rice cooking, or gruel cooking, for example.

Cooking of Chinese gruel typically requires a high ratio of water to rice. However, a high ratio of water to rice would reduce the possibility of crystallization during the cooling process due to the fact that the large amount of water would reduce the concentration of the amylose molecules. Based on this concern, the water for cooking gruel may be separated in two parts, i.e. the first portion of water that is added into the container 11 together with the rice at the very beginning, and the second portion of water that is added into the container 11 after all cycles of the steps of heating and cooling are finished.

The second portion of water may be added into the container 11 in various ways. For example, after all cycles of the steps of heating and cooling are finished, the user may add the second portion of water into the container 11 manually.

According to another example, advantageously, as shown in FIG. 1, the food cooker 10 may further comprise a water tank 15, which may be made from stainless steel or plastic for example. The water tank 15 may be disposed at any suitable position inside the container 11, for example, at the top of the inner surface of the container 11. The water tank 15 may be integrally formed with the container 11, or may be an individual unit that can be detachably mounted inside the container 11, for easy cleaning and replacement.

Further, a valve may be disposed on the water tank 15 and controlled to be open or closed to allow the water in the water tank 15 to flow into the container 11 or block the water from flowing into the container 11.

In operation, after all cycles of the steps of heating and cooling are finished, the controller 14 may control the valve disposed on the water tank 15 to be open to allow the second portion of water to flow into the container 11, and then control the valve to be closed after the second portion of water is added into the container 11. To be specific, for example, a flow meter (not shown) may be used to measure the amount of water that flows into the container 11. When the valve is controlled to be open, the flow meter starts to measure the amount of water flowing into the container 11 and reports the measurement results to the controller 14. The controller 14 controls the valve to be closed when the amount of water that flows into the container 11 meets a preset amount. It is to be noted that the preset amount is pre-stored in the controller 14, and may vary according to the practical application.

After the second portion of water is added into the container 11, the controller 14 may further control the heating unit 12 to heat the food in the container 11 until it is ready for consumption.

Compared to the traditional method of cooking gruel, where all the water is added into the container together with the rice at the beginning, in the embodiment of the invention, as the amount of water that is added into the container 11 together with the rice at the very
beginning is reduced, the possibility for crystallization during the cooling process is increased, and thus more resistant starch is generated.

The ratio of the first portion of water to the rice may be within the range of 1:1 to 10:1. Advantageously, the ratio of the first portion of water to the rice is 2:1, which is a good resistant starch converting rate under different cooling times and cooling temperatures.

The food cooker 10 may for example be an electric high pressure cooker, or any other cooker which could reach the first temperature and the second temperature.

In another aspect, one embodiment of the invention further provides a method of cooking starch-containing food grains. FIG. 2 shows a flow chart of a method of cooking starch-containing food grains in a container of a cooker according to the present invention.

Referring to FIG. 2, the method comprises a step S22 of heating a mixture of starch-containing food grains and a first portion of water to a first temperature to generate a heated mixture, the first temperature being higher than 110°C.

The method further comprises a step S24 of cooling down the heated mixture to a second temperature to generate a cooled mixture.

The steps of heating S22 and cooling S24 are repeated for a given number of cycles.

Advantageously, the first temperature maybe less than 130°C.

Advantageously, the method may further comprise the step of maintaining the heated mixture at the first temperature for a first duration.

Advantageously, the method may further comprise the step of maintaining the cooled mixture at the second temperature for a second duration.

Advantageously, the method may further comprise the steps of adding a second portion of water into the container, and heating the cooled mixture and the second portion of water so as to make the food in the container ready for consumption.

Advantageously, the method may further comprise the steps of obtaining information related to a total cooking duration, and determining the given cycles and/or the first duration and/or the second duration according to the information.

It should be noted that the above described embodiments are given for describing rather than limiting the invention, and it is to be understood that modifications and variations may be resorted to without departing from the scope of the invention as defined by the claims.

Any of the reference numerals in the claims should not be interpreted as a limitation to the claims. Use of the verb "comprise" and its conjugations does not exclude the presence of elements or steps other than those stated in a claim. The indefinite article "a" or "an" preceding an element or step does not exclude the presence of a plurality of such elements or steps.

## Claims

1. A method of cooking starch-containing food grains in a container of a cooker, the method comprising the steps of:
- adding a first portion of water and the starch-containing food grains into the container to form a mixture;
- heating (S22) the mixture of starch-containing food grains and the first portion of water to a first temperature to generate a heated mixture, the first temperature being higher than 110°C;
- cooling (S24) down the heated mixture to a second temperature to generate a cooled mixture;
- repeating the steps of heating (S22) and cooling (S24) for a given number of cycles to achieve a total cooking duration;
- after all repeated steps of heating and cooling are finished:
- adding a second portion of water into the container; and
- heating the cooled mixture and the second portion of water so as to make the food in the container ready for consumption.

2. The method of claim 1, wherein the first temperature is less than 130°C.

3. The method of claim 1, further comprising the step(s) of:
- maintaining the heated mixture at the first temperature for a first duration; and/or
- maintaining the cooled mixture at the second temperature for a second duration.

4. The method of claim 1, further comprising the steps of:
- obtaining information related to a total cooking duration;
- determining the given cycles and/or the first duration and/or the second duration according to the information.

5. The method of claim 1, wherein the ratio of the first portion of water to the starch-containing food grains is within the range of 1:1 to 10:1.

6. The method of claim 5, wherein the ratio of the first portion of water to the starch-containing food grains is 2:1.

7. The method of claim 1, wherein the second temperature is less than 100°C.

8. A food cooker (10) comprising:
- a container (11) configured to receive starch-containing food grains and a first portion of water which form a mixture;
- a heating unit (12) coupled with the container (11);
- a controller (14) electrically coupled to the heating unit (12) and configured to control the heating unit (12) to heat the mixture of the starch-containing food grains and the first portion of water in the container (11) to a first temperature to generate a heated mixture, the first temperature being higher than 110°C, and to cool down the heated mixture in the container (11) to a second temperature to generate a cooled mixture when the mixture of the starch-containing food grains and the first portion of water in the container (11) has been heated to the first temperature;
wherein the controller (14) controls the repeated heating and cooling steps for a given number of cycles to achieve a total cooking duration;
wherein the food cooker (10) further comprises a water tank (15), wherein the controller (14) is further configured to control the water tank (15) to be open, thus enabling a second portion of water to be added into the container (11), and to control the heating unit (12) to heat the cooled mixture and the second portion of water so as to make the food in the container (11) ready for consumption.

9. The food cooker (10) of claim 8, wherein the first temperature is less than 130°C.

10. The food cooker (10) of claim 8, further comprising a cooling unit (13) coupled to the controller (14), wherein the controller (14) is further configured to control the cooling unit (13) to cool down the heated mixture in the container (11) to the second temperature to generate the cooled mixture when the mixture of the starch-containing food grains and the first portion of water in the container (11) has been heated to the first temperature.

11. The food cooker (10) of claim 8, wherein the controller (14) is further configured to control the heating unit (12) to maintain the first heated mixture at the first temperature for a first duration, and/or to maintain the first cooled mixture at the second temperature for a second duration.

12. The food cooker (10) of claim 8, further comprising:
- a first unit (16) configured to obtain information related to a total cooking duration;
wherein the controller (14) is configured to determine the given cycles and/or the first duration and/or the second duration according to the information.

13. The food cooker (10) of claim 8, wherein the ratio of the first portion of water to the starch-containing food grains is within the range of 1:1 to 10:1.

## Patentansprüche

1. Verfahren zum Garen von stärkehaltigem Speisegetreide in einem Behälter eines Garers, wobei das Verfahren folgende Schritte umfasst:
- Hineingeben eines ersten Teils Wasser und des stärkehaltigen Speisegetreides in den Behälter, um ein Gemisch zu bilden;
- Erhitzen (S22) des Gemischs aus stärkehaltigem Speisegetreide und dem ersten Teil Wasser auf eine erste Temperatur, um ein erhitztes Gemisch zu erzeugen, wobei die erste Temperatur höher als 110°C ist;
- Abkühlen (S24) des erhitzten Gemischs auf eine zweite Temperatur, um ein abgekühltes Gemisch zu erzeugen;
- Wiederholen der Schritte des Erhitzens (S22) und des Abkühlens (S24) für eine gegebene Anzahl von Zyklen, um eine Gesamtgardauer zu erreichen;
- nachdem alle wiederholten Schritte des Erhitzens und Abkühlens abgeschlossen sind:
- Hineingeben eines zweiten Teils Wasser in den Behälter; und
- Erhitzen des abgekühlten Gemischs und des zweiten Teils Wasser, um die Speise im Behälter verzehrfertig zu machen.

2. Verfahren nach Anspruch 1, wobei die erste Temperatur niedriger als 130°C ist.

3. Verfahren nach Anspruch 1, weiterhin umfassend folgende(n) Schritt(e):
- Halten des erhitzten Gemischs auf der ersten Temperatur für eine erste Dauer; und/oder
- Halten des abgekühlten Gemischs auf der zweiten Temperatur für eine zweite Dauer.

4. Verfahren nach Anspruch 1, weiterhin umfassend folgende Schritte:
- Erhalten von Informationen betreffend einer Gesamtgardauer;
- Bestimmen der gegebenen Zyklen und/oder der ersten Dauer und/oder der zweiten Dauer gemäß den Informationen.

5. Verfahren nach Anspruch 1, wobei das Verhältnis des ersten Teils Wasser zum stärkehaltigen Speisegetreide in dem Bereich von 1:1 bis 10:1 liegt.

6. Verfahren nach Anspruch 5, wobei das Verhältnis des ersten Teils Wasser zum stärkehaltigen Speisegetreide bei 2:1 liegt.

7. Verfahren nach Anspruch 1, wobei die zweite Temperatur niedriger als 100°C ist.

8. Lebensmittelgarer (10), umfassend:
- einen Behälter (11), der zum Aufnehmen von stärkehaltigem Speisegetreide und eines ersten Teils Wasser ausgelegt ist, um ein Gemisch zu bilden;
- eine Heizeinheit (12), die an den Behälter (11) gekoppelt ist;
- einen Regler (14), der elektrisch an die Heizeinheit (12) gekoppelt und zum Regeln der Heizeinheit (12) ausgelegt ist, um das Gemisch aus stärkehaltigem Speisegetreide und dem ersten Teil Wasser in dem Behälter (11) auf eine erste Temperatur zu erhitzen, um ein erhitztes Gemisch zu erzeugen, wobei die erste Temperatur höher als 110 °C ist, und um das erhitzte Gemisch in dem Behälter (11) auf eine zweite Temperatur abzukühlen, um ein abgekühltes Gemisch zu erzeugen, wenn das Gemisch aus stärkehaltigem Speisegetreide und dem ersten Teil Wasser in dem Behälter (11) auf die erste Temperatur erhitzt wurde;
wobei der Regler (14) die wiederholten Erhitzungs- und Abkühlungsschritte für eine gegebene Anzahl von Zyklen regelt, um eine Gesamtgardauer zu erreichen;
wobei der Lebensmittelgarer (10) weiterhin einen Wassertank (15) umfasst, wobei der Regler (14) weiterhin zum Regeln des Wassertanks (15) ausgelegt ist, damit dieser offen ist, um so zu ermöglichen, dass ein zweiter Teil Wasser in den Behälter (11) hineingegeben wird, und zum Regeln der Heizeinheit (12), um das abgekühlte Gemisch und den zweiten Teil Wasser zu erhitzen, um die Speise in dem Behälter (11) verzehrfertig zu machen.

9. Lebensmittelgarer (10) nach Anspruch 8, wobei die erste Temperatur niedriger als 130°C ist.

10. Lebensmittelgarer (10) nach Anspruch 8, weiterhin umfassend eine Kühleinheit (13), die an den Regler (14) gekoppelt ist, wobei der Regler (14) weiterhin zum Regeln der Kühleinheit (13) ausgelegt ist, um das erhitzte Gemisch in dem Behälter (11) auf die zweite Temperatur abzukühlen, um das abgekühlte Gemisch zu erzeugen, wenn das Gemisch aus stärkehaltigem Speisegetreide und dem ersten Teil Wasser in dem Behälter (11) auf die erste Temperatur erhitzt wurde.

11. Lebensmittelgarer (10) nach Anspruch 8, wobei der Regler (14) weiterhin zum Regeln der Heizeinheit (12) ausgelegt ist, um das erste erhitzte Gemisch auf der ersten Temperatur für eine erste Dauer zu halten, und/oder um das erste abgekühlte Gemisch auf der zweiten Temperatur für eine zweite Dauer zu halten.

12. Lebensmittelgarer (10) nach Anspruch 8, weiterhin umfassend:
- eine erste Einheit (16), die zum Erhalten von Informationen betreffend einer Gesamtgardauer ausgelegt ist;
wobei der Regler (14) zum Bestimmen der gegebenen Zyklen und/oder der ersten Dauer und/oder der zweiten Dauer gemäß den Informationen ausgelegt ist.

13. Lebensmittelgarer (10) nach Anspruch 8, wobei das Verhältnis des ersten Teils Wasser zum stärkehaltigen Speisegetreide in dem Bereich von 1:1 bis 10:1 liegt.

## Revendications

1. Procédé de cuisson de céréales alimentaires contenant de l'amidon dans un contenant d'un cuiseur, le procédé comprenant les étapes de :
- ajout d'une première portion d'eau et des céréales alimentaires contenant de l'amidon dans le contenant pour former un mélange ;
- chauffage (S22) du mélange de céréales alimentaires contenant de l'amidon et de la première portion d'eau à une première température pour générer un mélange chauffé, la première température étant supérieure à 110 °C ;
- refroidissement (S24) du mélange chauffé à une seconde température pour générer un mélange refroidi ;
- répétition des étapes de chauffage (S22) et de refroidissement (S24) pendant un nombre donné de cycles pour parvenir à une durée de cuisson totale ;
- après que toutes les étapes répétées de chauffage et de refroidissement sont finies :
- ajout d'une seconde portion d'eau dans le contenant ; et
- chauffage du mélange refroidi et de la seconde portion d'eau de façon à rendre l'aliment dans le contenant prêt à la consommation.

2. Procédé selon la revendication 1, dans lequel la première température est inférieure à 130°C.

3. Procédé selon la revendication 1, comprenant en outre l'étape ou les étapes de:
- maintien du mélange chauffé à la première température pendant une première durée ; et/ou
- maintien du mélange refroidi à la seconde température pendant une seconde durée.

4. Procédé selon la revendication 1, comprenant en outre les étapes de :
- obtention d'informations relatives à une durée de cuisson totale ;
- détermination des cycles donnés et/ou de la première durée et/ou de la seconde durée selon les informations.

5. Procédé selon la revendication 1, dans lequel le rapport entre la première portion d'eau et les céréales alimentaires contenant de l'amidon est dans la plage de 1 : 1 à 10 : 1.

6. Procédé selon la revendication 5, dans lequel le rapport entre la première portion d'eau et les céréales alimentaires contenant de l'amidon est de 2 : 1.

7. Procédé selon la revendication 1, dans lequel la seconde température est inférieure à 100°C.

8. Cuiseur à aliment (10) comprenant :
- un contenant (11) configuré pour recevoir des céréales alimentaires contenant de l'amidon et une première portion d'eau qui forment un mélange ;
- une unité de chauffage (12) couplée au contenant (11) ;
- un dispositif de commande (14) couplé électriquement à l'unité de chauffage (12) et configuré pour commander à l'unité de chauffage (12) de chauffer le mélange des céréales alimentaires contenant de l'amidon et de la première portion d'eau dans le contenant (11) à une première température pour générer un mélange chauffé, la première température étant supérieure à 110 °C, et de refroidir le mélange chauffé dans le contenant (11) à une seconde température pour générer un mélange refroidi lorsque le mélange des céréales alimentaires contenant de l'amidon et de la première portion d'eau dans le contenant (11) a été chauffé à la première température ;
dans lequel le dispositif de commande (14) commande les étapes de chauffage et de refroidissement répétées pendant un nombre donné de cycles pour parvenir à une durée de cuisson totale ;
dans lequel le cuiseur à aliment (10) comprend en outre un réservoir d'eau (15), dans lequel le dispositif de commande (14) est en outre configuré pour commander au réservoir d'eau (15) de s'ouvrir, permettant ainsi d'ajouter une seconde portion d'eau dans le contenant (11), et pour commander à l'unité de chauffage (12) de chauffer le mélange refroidi et la seconde portion d'eau de façon à rendre l'aliment dans le contenant (11) prêt à la consommation.

9. Cuiseur à aliment (10) selon la revendication 8, dans lequel la première température est inférieure à 130°C.

10. Cuiseur à aliment (10) selon la revendication 8, comprenant en outre une unité de refroidissement (13) couplée au dispositif de commande (14), dans lequel le dispositif de commande (14) est en outre configuré pour commander à l'unité de refroidissement (13) de refroidir le mélange chauffé dans le contenant (11) à la seconde température pour générer le mélange refroidi lorsque le mélange de céréales alimentaires contenant de l'amidon et de la première portion d'eau dans le contenant (11) a été chauffé à la première température.

11. Cuiseur à aliment (10) selon la revendication 8, dans lequel le dispositif de commande (14) est en outre configuré pour commander à l'unité de chauffage (12) de maintenir le premier mélange chauffé à la première température pendant une première durée, et/ou de maintenir le premier mélange refroidi à la seconde température pendant une seconde durée.

12. Cuiseur à aliment (10) selon la revendication 8, comprenant en outre :
- une première unité (16) configurée pour obtenir des informations relatives à une durée de cuisson totale ;
dans lequel le dispositif de commande (14) est configuré pour déterminer les cycles donnés et/ou la première durée et/ou la seconde durée selon les informations.

13. Cuiseur à aliment (10) selon la revendication 8, dans lequel le rapport entre la première portion d'eau et les céréales alimentaires contenant de l'amidon est dans la plage de 1 : 1 à 10 : 1.
